Europäisches Patentamt

European Patent Office

Office européen des brevets

(11) Publication number: **0 281 691**
**A2**

## · EUROPEAN PATENT APPLICATION

(21) Application number: 87202660.4

(51) Int. Cl.4 **D01F 6/60** , D01F 1/10

(22) Date of filing: 31.12.87

(30) Priority: 10.03.87 JP 56091/87

(43) Date of publication of application:
14.09.88 Bulletin 88/37

(84) Designated Contracting States:
AT BE CH DE ES FR GB IT LI NL SE

(71) Applicant: **STAMICARBON B.V.**
**Mijnweg 1**
**NL-6167 AC Geleen(NL)**

(72) Inventor: **Kiriyama, Shunichi**
**Unitika Ltd. Uji Kozakura 23**
**Uji-shi Kyoto-fu(JP)**
Inventor: **Nagaoka, Koichi**
**Unitika Ltd. Uji Kozakura 23**
**Uji-shi Kyoto-fu(JP)**
Inventor: **Miyahara, Yoshiki**
**Unitika Ltd. Uji Kozakura 23**
**Uji-shi Kyoto-fu(JP)**
Inventor: **Mishima, Yasunobu**
**Unitika Ltd. Uji Kozakura 23**
**Uji-shi Kyoto-fu(JP)**

(54) Polyamide monofilaments used for papermaking apparatus.

(57) The present invention relates to polyamide monofilaments for papermaking apparatus mainly consisting of nylon 4.6 with a heat-stabilizer. The monofilaments retain after moist heat treatment their strength much better than nylon 6 and 6.6.

EP 0 281 691 A2

## POLYAMIDE MONOFILAMENTS USED FOR PAPERMAKING APPARATUS

The present invention relates to polyamide monofilaments for papermaking apparatus, which are made of nylon 4.6 and are superior in moist heat resistance.

In the process of papermaking the suspension of cellulose fibers and other inorganic and organic filler materials is deposited on a moving fabric of polymer filaments, dewatered, pressed and dried. Temperatures may range from 40-80¤C in the deposition section to up to 120-170¤C for the drying section. Especially in the dewatering and pressing section high mechanical forces may be excerted on the fabrics used to transport and dewater the cellulose suspension. Further there is appreciable abrasion by especially the inorganic filler materials. For this reason a very frequent replacement of the polymer fabrics is necessary, and much research is directed at increasing the lifetime of these polymer fabrics for paper making apparatus.

The use of polyamide monofilaments for papermaking apparatus has been proposed in Japanese Patent Application No. 183418/1982. However the filaments produced from the polyamides mentioned in this application, nylon 6, nylon 6.6, nylon 6.10 and nylon 6.12 do show appreciable detoriation under hot moist conditions and lose strenght.

Polyamide monofilaments of nylon-4.6 are proposed in Japanese Patent Applications Nos. 47813/1986 and 124622/1986. Although they are claimed to be suitable for fishing lines and fishing nets, there is no indication that they should be suitable for papermaking apparatus, for which the conditions are much more severe.

It is an object of the present invention to provide polyamide monofilaments for papermaking apparatus which are superior in moist heat resistance.

The above-mentioned object is achieved by polyamide monofilaments made of nylon 4.6 containing a heat-resistant agent. Therefore the monofilaments for papermaking apparatus according to the present invention are polyamide monofilaments having a diameter of between 0.1 to 3 mm and consisting of at least 70 % by weight of tetramethyleneadipamide units, having a relative viscosity of 2.8 and containing a heat-stabilizing agent.

The polyamide of which the monofilaments of the present invention are made is one in which tetramethyleneadipamide units (nylon 4.6) accounts for at least 70 % by weight of the constituent. It may be contain nylon 6, nylon 6.6, nylon 6.10, nylon 6.12 or the like copolymerized or blended therein. According to the invention, it is necessary that the amount of the copolymer component or blend component should be less than 30 % by weight. With an amount of 30 % by weight or more, the monofilaments extremely degrade and decrease in strength upon exposure to moist heat. Thus they do not achieve the object of the invention.

In addition, according to the invention, it is necessary that the monofilaments should be incorporated with a heat-stabilizing agent for the improvement of heat resistance. The heat-stabilizing agent is selected from copper compounds, alkali metal halides, alkaline earth metal halides, amine compounds, phenol compounds, phosphorus compounds, sulfur-containing compounds, and mixtures thereof. Preferred examples include a combination of copper halide and potassium halide and a combination of copper halide and 2-mercaptobenzoimidazole. The amount of addition should be 50 to 400 ppm (in terms of copper) for copper halide, 200 to 1000 ppm (in terms of potassium) for potassium halide, and 0.1 to 0.5 % by weight for 2-mercaptobenzoimidazole. The heat-stabilizing agent can be added to the polyamide in any manner. For example, it may be added to the polymer chips or it may be added at the time of polymerization.

The polyamide may also be incorporated with antioxidants, plasticizers, lubricants, pigments, dyes, and the like.

According to the invention, it is necessary that the monofilaments should have a relative viscosity of 2.8 and above (as measured at a concentration of 1 g/dl in 96 % by weight sulfuric acid at 25¤C). With a relative viscosity lower than 2.8, the polyamide does not pro viue high-strength monofilaments efficiently.

According to the invention, it is necessary that the monofilaments should have a diameter of 0.1 to 3 mm. With a diameter outside this range, the monofilaments are not suitable for papermaking apparatus.

The monofilaments of the present invention can be produced in the following manner. Dried polymer chips containing a heat-resistant agent are melted at 280 to 320¤C using an ordinary single screw melt extruder, and the melt is extruded from a spinneret, with the residence time being 3 minutes or less. With a melt temperature lower than 280¤C, the polymer is not melted completely; and with a melt temperature higher than 320¤C, the polymer undergoes thermal decomposition even though the residence time is shorter than 3 minutes and the polymer is thoroughly dried to a water content less than 0.03 % by weight.

The emergent monofilaments are passed through a nitrogen-shield heating cylinder at 250 to 400¤C, installed just below the spinneret. Then the monofilaments are quenched and drawn.

The quenching is accomplished with a cooling medium which is a polar solvent or non-polar solvent such as water, glycerin, ethylene glycol, methanol, tetrachloroethylene, and methylene chloride.

The gap between the heating cylinder and the level of cooling medium should be 1 to 20 cm as usual and the take-up speed should be 5 to 100 m/min.

After take-up, the monofilaments undergo hot drawing in a dry heating bath or liquid heating bath containing warm water, hot water, steam, or heat medium such as glycerin and ethylene glycol. The drawing should be carried out in two or more multiple stages, and the total draw ratio should be 2 to 5.5 times the original length. After drawing, the monofilaments may undergo relaxation heat treatment.

Drawing or heat relaxation treatment performed at 230¤C or above, preferably at 250¤C or above, produces highly crystallized monofilaments which are desirable.

The monofilaments obtained in this manner are superior not only in moist heat resistance but also in strength and dimensional stability, and they are suitable for papermaking apparatus.

The moist heat resistance of the monofilaments was evaluated according to the retention S of tensile strength after moist heat treatment and the retention F of loop strength after moist heat treatment which are defined by the following equations (1) and (2)

$$S (\%) = (S \cdot S_0) \times 100 \qquad (1)$$
$$F (\%) = (F \cdot F_0) \times 100 \qquad (2)$$

Where

$S_0$ = tensile strength before treatment (kg)

$S_1$ = tensile strength after moist heat treatment (kg)

$F_0$ = loop strength before treatment (kg)

$F$ = loop strength after moist heat treatment (kg)

The moist heat treatment is performed by heating the samples of reeled monofilaments for 15 days in a pressure container equipped with a reducing valve and a pressure gauge. The tensile strength and loop strength are measured according to JIS L-1013 'Methods for testing chemical fiber filaments'. The retention is the ratio of the strength before treatment to the strength after treatment.

The polyamide monofilaments for papermaking apparatus should preferably have a value of S higher than 90 % and a value of F higher than 80 %. This requirement is met by the present invention. The felt blanket made of the polyamide monofilaments lasts longer before replacement than the conventional one.

The invention is now described with reference to the following examples and comparative examples.

Examples and comparative examples

Polyamide monofilaments were prepared from polyamide (co)polymer chips.

The chips were fed to a single-screw melt extruder, melted and spinned through a spinneret having one hole with 2.0 mm diameter. The emergent monofilament was passed through a nitrogen-shielded heating cylinder (hood), installed just below the spinneret. Subsequently the monofilament was passed through water for quenching.

Thereafter the filaments went through a number of drawing steps. Spinning and drawing conditions for the different examples are given in Table 1 together with the test results.

Comparative Example 1

Polyamide monofilaments were prepared from nylon 6.6 chips having a relative viscosity of 3.0 in the same manner as in Example 1 except that the conditions were changed as folllows: See Table 1.

Comparative Example 2

Polyamide monofilaments were prepared from nylon 6 chips having a relative viscosity of 3.4 in the same manner as in Example 1 except that the conditions were changed as follows: See Table 1.

Comparative Example 3

A commercial PET monofilament for papermaking apparatus was given the same tests.

The moist heat resistance of the monofilaments obtained in Examples and Comparative Examples was evaluated by the above-mentioned method.

In further examples and a comparative example monofilaments of nylon 4.6 (5 % nylon 6 copolymer) (Example 2), nylon 4.6 (30 % nylon 6 copolymer, Example 3) with the addition of the same quantities of thermal stabilizer as in example 1 and of nylon 4.6 (5 % nylon 6 copolymer) without stabilizer (comparative example 4) have been produced under circumstances comparable to those of example 1. The following values for the retention of strength have been obtained.

|                    | S (%) | F (%) |
|--------------------|-------|-------|
| Example 2          | 95    | 91    |
| Example 3          | 92    | 85    |
| Comp. Example 4    | 85    | 79    |

From the examples one can conclude that the polyamide monofilaments according to the invention show a much better retention behavior compared to those consisting of nylon 6 and 6.6 and PET.
The elongation is better than for nylon 6 and PET.
It was further observed that the shrinkage is better than for nylon 6.6 and 6.
As the results of the examples indicate, the present invention provides polyamide monofilaments which are superior in moist heat resistance and sufficiently durable when used for papermaking apparatus. Thus the present invention eliminates drawbacks encountered by the conventional polyamide monofilaments of nylon 6, nylon 6.6, nylon 6.10 or nylon 6.12 which are so poor in moist heat resistance that the felt blanket made from them has to be replaced frequently.

4

# T A B L E   1

## Properties of Monofilament

(1) Spinning and Drawing Condition of Monofilament

| Sample No. | | 1<br>Ex. 1 | 2<br>Comp. Ex. 1 | 3<br>Comp. Ex. 2 | 4<br>Comp. Ex. 3 |
|---|---|---|---|---|---|
| Polymer | | Nylon 4.6 | Nylon 6.6 | Nylon 6 | PET |
| Polymer relative viscosity | | 3.80 | 3.30 | 3.00 | - |
| **Spinning condition** | | | | | |
| Extruder, diameter | (mm) | 20 | 20 | 20 | - |
| Spinneret (mm x Hole No.) | | 2.0 x 1 | 2.0 x 1 | 2.0 x 1 | - |
| Polymer through put | (g/min) | 22.3 | 22.3 | 22.3 | - |
| Winding speed | (m/min) | 33 | 33 | 33 | - |
| Spinning temperature | (¤C) | 295 | 295 | 285 | - |
| Hood temperature | (¤C) | 350 | 350 | 350 | - |
| Hood length | (mm) | 200 | 200 | 200 | - |
| Quenching bath temp. | (¤C) | 80 | 85 | 50 | - |
| Air gap | (mm) | 220 | 220 | 220 | - |
| Additive agent (CuI/KI) | (wt%) | 0.03/0.10 | - | - | - |
| **Drawing condition** | | | | | |
| Total drawing ratio | (-) | 4.250 | 4.500 | 4.500 | - |
| 1st drawing ratio | (-) | 3.880 | 3.500 | 3.500 | - |
| 2nd drawing ratio | (-) | 1.095 | 1.286 | 1.286 | - |
| 3rd drawing ratio | (-) | 0.915 | 0.960 | 0.960 | - |
| 1st drawing temperature | (¤C) | 150 | 160 | 160 | - |
| 2nd drawing temperature | (¤C) | 160 | 175 | 175 | - |
| 3rd drawing temperature | (¤C) | 300 | 200 | 200 | - |
| Winding speed | (m/min) | 19.4 | 21.6 | 21.6 | - |

Remark:   Quenching and drawing mediums are as follows:
Quenching bath         : Hot water
1st drawing bath       : Glycerin
2nd drawing bath       : Glycerin
3rd drawing bath       : Hot air.

## T A B L E   2

(2) Effects of Steam Treatment on Properties of Monofilament

| Sample No. | | | | 1<br>Ex. 1 | 2<br>Comp. Ex. 1 | 3<br>Comp. Ex. 2 | 4<br>Comp. Ex. 3 |
|---|---|---|---|---|---|---|---|
| Polymer | | | | Nylon 4.6 | Nylon 6.6 | Nylon 6 | PET |
| Monofilament relative viscosity | | | | 3.403 | 3.277 | 3.033 | 1.415 |
| Monofilament denier | | | | 1686 | 1580 | 1663 | 1993 |
| Monofilament diameter | | | (mm) | 0.44 | 0.43 | 0.44 | 0.45 |
| Straight | Strength | $S_0$ | (kg) | 8.27 | 8.13 | 8.30 | 8.70 |
| | | $S_1$ | (kg) | 8.13 | 7.20 | 6.86 | Brittle |
| | | $S_1/S_0 \times 100$ | (%) | 98.3 | 88.6 | 82.7 | – |
| | Elongation | A | (%) | 19.8 | 18.9 | 34.9 | 32.8 |
| | | B | (%) | 28.6 | 27.6 | 43.9 | Brittle |
| Loop | Strength | $F_0$ | (kg) | 7.63 | 7.83 | 9.96 | 15.60 |
| | | $F_1$ | (kg) | 7.77 | 5.26 | 8.67 | Brittle |
| | | $F_1/F_0 \times 100$ | (%) | 101.8 | 67.2 | 87.0 | – |
| | Elongation | A | (%) | 10.5 | 8.2 | 12.4 | 28.7 |
| | | B | (%) | 15.0 | 11.2 | 25.7 | Brittle |

Remark:
1.  Nylon 4.6 polymer of Sample No. 1 is a copolymer of nylon 4.6 and nylon 6, and is composed of nylon 4.6 having a relative viscosity of 3,8 and 5 wt.% of nylon 6;
2.  PET monofilament commercial product for papermaking apparatus;
3.  A gives properties of monofilaments before treatment, B gives properties of monofilaments after 15 days steam treatment.
    The steam treatment of monofilaments was carried out under the condition of 120¤C, 1.0 kg/cm2G.
4.  The condition of heat treatment in shrinkage is 180¤C x 30 min under free tension.

# 0 281 691

## Claims

1. Polyamide monofilament for paper making apparatus having a diameter of between 0.1 and 3 mm and consisting of at least 70 % by weight of tetramethyleneadipamide untis the polyamide having a relative viscosity of at least 2.8 and containing a heat-stabilizing agent.

2. Polyamide monofilament according to claim 1, wherein the heat stabilizer is composed of a mixture of cuprous iodide and potassium iodide.

7